Europäisches Patentamt

(19) European Patent Office

Office européen des brevets

(11) Numéro de publication: **0 092 469**
**B1**

(12) **FASCICULE DE BREVET EUROPEEN**

(45) Date de publication du fascicule du brevet:
05.02.86

(51) Int. Cl.⁴: **F 16 D 65/24, B 60 T 11/30**

(21) Numéro de dépôt: **83400733.8**

(22) Date de dépôt: **13.04.83**

(54) Dispositif de purge pour ensemble à cylindre et piston, et moteur de frein équipé d'un tel dispositif.

(30) Priorité: 21.04.82 FR 8206860

(43) Date de publication de la demande:
26.10.83 Bulletin 83/43

(45) Mention de la délivrance du brevet:
05.02.86 Bulletin 86/6

(84) Etats contractants désignés:
BE DE GB IT SE

(56) Documents cités:
FR - A - 996 049
FR - A - 997 933
US - A - 2 298 008
US - A - 2 329 095

(73) Titulaire: BENDIX France, Centre Paris Pleyel,
F-93521 St-Denis Cédex 01 (FR)

(72) Inventeur: Langlois, Gérard, 57, rue Henri Longatte,
F-93700 Drancy (FR)

(74) Mandataire: Le Moenner, Gabriel et al, SERVICE
BREVETS BENDIX 44, Rue François 1er, F-75008 Paris
(FR)

LIBER, STOCKHOLM 1986

## Description

L'invention concerne un dispositif de purge pour ensemble à cylindre et piston, ainsi qu'un moteur de frein équipé d'un tel dispositif, et plus particulièrement un dispositif de purge pour ensemble à cylindre et piston dans lequel est défini un volume d'actionnement présentant, en égard à l'orientation générale de montage de l'ensemble, une partie haute, du type dans lequel le volume d'actionnement est divisé par une cloison en deux chambres intercommunicantes ayant chacune une partie haute, un orifice d'admission de fluide débouchant dans une première des chambres, et un orifice de purge faisant communiquer la partie haute de la seconde chambre avec l'extérieur, tel que décrit dans le document US-A-2 329 095.

Dans un ensemble à cylindre et piston, lors du remplissage en fluide hydraulique du volume d'actionnement défini entre le cylindre et le piston, il y a lieu d"évacuer de manière complète le gaz (en règle générale l'air) présent dans ce volume.

Pour ce faire, on prévoit un orifice de purge en partie haute du volume en question, en égard au sens de montage de l'ensemble, cet orifice étant obturé par un bouchon amovible que l'on ôte pour assurer l'échappement de l'air, puis que l'on replace lorsque le liquide de remplissage commence à refouler par l'orifice.

Il n'est malheureusement pas toujours possible de disposer l'orifice de purge à l'endroit adéquat, soit pour des raisons d'accessibilité, soit parce que la partie haute du volume est susceptible de se déplacer, en particulier lorsque cette partie haute est définie au voisinage du piston et que la position du piston est susceptible d'évoluer dans le temps.

La présente invention a pour objet de pallier ces inconvénients en proposant un dispositif de purge pour ensemble à cylindre et piston agencé pour permettre une purge complète quelle que soit la position du piston et quelle que soit le degré d'inclinaison de l'axe de l'ensemble par rapport à l'horizontale.

Pour ce faire selon une caractéristique de l'invention, le dispositif de purge pour ensemble à cylindre et piston est caractérisé en ce que la première chambre a pour partie haute la partie haute du volume d'actionnement, la seconde chambre ayant sa propre partie haute située à un niveau inférieur de la précédente, et en ce qu'il comporte un conduit reliant la partie haute de la première chambre et la seconde chambre.

Dans un tel agencement, l'admission du fluide d'actionnement s'effectue dans la première chambre, ou chambre 'supérieure', et l'orifice de purge débouche dans la partie haute de la seconde chambre, ou chambre 'inférieure', cette seconde chambre étant en communication permanente avec la partie haute de la première chamnbre via ledit conduit, qui s'étend avantageusement au travers de la cloison séparatrice.

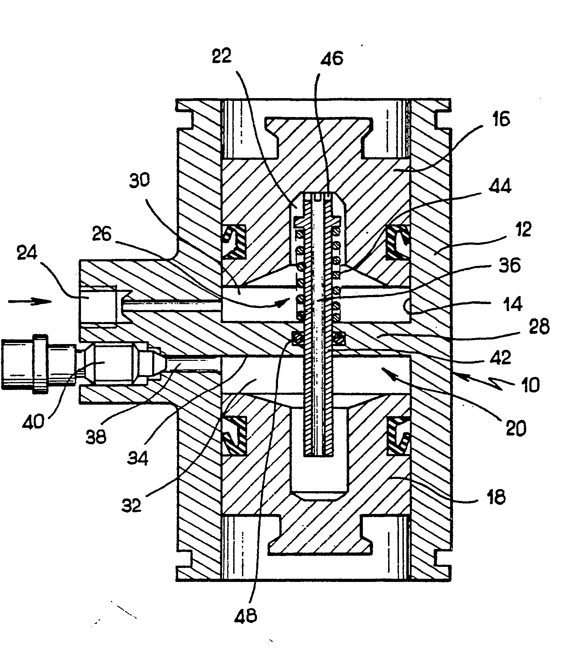

L'invention sera maintenant décrite en se référant à la figure unique du dessin annexé qui est une vue en coupe d'un ensemble à cylindre et piston incorporant un dispositif de purge selon l'invention.

En particulier l'ensemble à cylindre et piston 10 consiste en un moteur de frein à tambour prévu pour être implanté sur un véhicule, La position de montage sera explicitée plus loin.

Le cylindre comprend un boîtier 12 percé d'un alésage 14 dans lequel est monté coulissant un piston 18. A l'opposé du piston 18 coulisse également un second piston 18 ; selon une variante non représentée, l'alesage 14 comporte une extrémité borgne ou une paroi d'extrémité fixé en lieu et placé du piston 18.

Entre l'alésage 14 et les pistons 18 et 18 est défini un volume d'actionnement désigné dans son ensemble par la référence 20.

Le moteur de frein est implanté sur le véhicule de telle sorte que l'axe de l'alésage 14 est normalement incliné par rapport à l'horizontale, ou encore vertical comme représenté sur la figure, le piston 18 étant dans tous les cas placé vers le haut.

Par conséquent, le volume 20 présente une partie haute 22 adjacente au piston 18.

De manière à faciliter la purge du volume 20 lors du remplissage en fluide hydraulique via un orifice d'entrée 24 il est prévu un dispositif de purge désigné par la référence 26 et constitué comme suit:

Une cloison stationnaire 28 est montée dans l'alésage 14 de manière à diviser le volume 20 en deux chambres : une première chambre 30, située au-dessus de la cloison 28 et ayant pour partie haute la partie haute 22 du volume 20, et une seconde chambre 32, située au-dessous de la cloison 28 et ayant sa propre partie haute 34 située à un niveau inférieur de celui de la partie haute 22 de la première chambre 30. Un conduit 36 relie la partie haute 22 de la première chambre 30 à la seconde chambre 32, avantageusement à une partie basse de cette seconde chambre 32. L'orifice d'entrée 24 débouche dans une partie basse de la première chambre et un orifice de purge 38 traverse le boîtier 12 en débouchant dans la partie haute 34 de la seconde chambre 32. Comme oonnu en soi, l'orifice 38 est fermé par un bouchon amovible 40 communément appelé 'vis de purge'.

Tel que représenté, le conduit 36 est constitué par un élément tubulaire monté coulissant dans un perçage central 42 de la cloison 28 et sollicité en direction du piston 16 par un ressort 44. Pour éviter l'obturation de l'extrémité adjacente ou haute du conduit 36 au contact du piston, il est prévu une ou plusieurs encoches 46 à cette extrémité du conduit. De plus, un joint 48 assure une étanchéité sommaire entre la cloison 28 et le conduit 36; en variante, on pourra omettre le joint 48 à condition de prévoir un jeu suffisamment faible entre le conduit 36 et la cloison 28. Lors du remplissage du moteur de frein l'évacuation de l'air present dans le volume 20 s'effectue de la manière suivante:

Le bouchon 40 étant ôté, le liquide penetre par l'orifice 24 dans la première chambre 30 en chassant progressivement l'air présent dans cette chambre par le conduit 36, la seconde chambre 32 et l'orifice de purge 38.

Une fois que le liquide a rempli en totalité la première chambre 30, il s'écoule à son tour par le conduit 36 vers la seconde chambre 32. Celle-ci se remplit alors, l'air étant progressivement chassé au travers de l'orifice 38.

2

Lorsque la chambre 32 est totalement remplie, le liquide commence à s'écouler par cet orifice que l'on referme alors.

On remarquera que la purge du moteur de frein sera complète quelle que soit la position du piston 16. En effet, le conduit 36 est constamment repoussé par le ressort 44 jusqu'au contact du piston; ainsi l'extrémité correspondante du conduit débouche en toutes circonstances dans la partie haute 22 de la première chambre 30, qui est aussi la partie haute du volume d'actionnement 20.

L'avantage principal de l'invention réside dans la possibilité d'implanter l'orifice de purge 38 de manière beaucoup plus flexible, surtout dans les cas où la partie haute 22 est, soit inaccessible directement, soit susceptible de se déplacer, comme dans l'exemple décrit.

Pour des raisons évidentes, la section interne du conduit 36 sera choisie suffisamment faible pour éviter que des bulles d'air y restent emprisonnées.

Enfin, bien que, selon la figure, il soit représenté que la cloison 28 est venue de matière avec le boîtier 12, on pourra prévoir une cloison rapportée.

## Revendications

1. Dispositif de purge (26) pour ensemble à cylindre et piston (10) dans lequel est défini un volume d'actionne ment (20) présentant, en égard à l'orientation généralede montage de l'ensemble, une partie haute (22), le volume d'actionnement étant divisé par une cloison (28) en deux chambres (30,32) intercommunicantes ayant chacune une partie haute, un orifice (24) d'admission de fluide débouchant dans une première (30) des chambres, et un orifice (38) de purge faisant communiquer la partie haute de la seconde chambre (32) avec l'extérieur, caractérisé en ce que la première chambre (30) a pour partie haute la partie haute (22) du volume d'actionnement (20), la seconde chambre (32) ayant sa propre partie haute (34) située à un niveau inferieur de la précédente, et en ce qu'il comporte un conduit (36) reliant la partie haute (22) de la première chambre (30) et la seconde chambre (32).

2. Dispositif de purge selon la revendication 1, pour ensemble à cylindre et piston dans lequel ladite partie haute (22) de la première chambre (30) est adjacente audit piston (16), caractérisé en ce que ledit conduit est formé par un élémenttubulaire (36) s'étendant au travers de ladite cloison (28).

3. Dispositif de purge selon la revendication 2, caractérisé en ce que l'élément tubulaire (36) est monté coulissant au travers de la cloison (28) et est sollicité par un ressort (44) au contact dudit piston (16).

4. Dispositif selon l'une des revendications 1 à 3, caractérisé en ce que ladite cloison (28) est constituée par un élément rapporte.

5. Moteur de frein pour véhicule automobile, caractérisé en ce qu'il comprend un dispositif de purge selon l'une des revendications 1 à 4.

## Patentansprüche

1. Entlüftungsvorrichtung (26) für eine Zylinder-Kolbenanordnung (10), in der ein Betätigungsvolumen (20) gebildet ist, das bezüglich der allgemeinen Einbaulage der Anordnung einen hochliegenden Abschnitt (22) aufweist, wobei das Betätigungsvolumen durch eine Trennwand (28) in zwei untereinander verbundene Kammern(30,32) unterteilt ist, die jeweils einen hochliegenden Abschnitt haben, eine StrömungsmittelEinlaßöffnung (24) in einer ersten Kammer (30) mündet und eine Entlüftungsöffnung (38) den hochliegenden Abschnitt der zweiten Kammer (32) mit der Umgebung verbindet, dadurch gekennzeichnet, daß die erste Kammer (30) als hochliegenden Abschnitt den hochliegenden Abschnitt (22) des Betätigungsvolumens (20) hat, wobei die zweite Kammer (32) ihren eigenen hochliegenden Abschnitt (34) hat, der auf einem niedrigeren Niveau als der erstere liegt, und daß eine Leitung (36) den hochliegenden Abschnitt (22) der ersten Kammer (30) und die zweite Kammer (32) verbindet.

2. Entlüftungsvorrichtung nach Anspruch 1 für eine Zylinder-Kolbenanordnung, bei der der hochliegende Abschnitt (22) der ersten Kammer (30) an den Kolben (16) ancrenzt, dadurch gekennzeichnet, daß die Leitung von einem Rohrkörper (36) gebildet wird, der sich durch die Trennwand (28) hindurcherstreckt.

3. Entlüftungsvorrichtung nach Anspruch 2, dadurch gekennzeichnet, daß der Rohrkörper (36) in der Trennwand (28) gleitbar gelagert ist und von einer Feder (44) in Anlage mit dem Kolben (16) gedrückt wird.

4. Vorrichtung nach einem der Ansprüche 1-3, dadurch gekennzeichnet, daß die Trennwand (25) aus einem gesonderten Bauteil besteht.

5. Bremsmotor für ein Kraftfahrzeug, dadurch gekennzeichnet, daß er eine Entlüftungsvorrichtung nach einem der Ansprüche 1-4 enthält.

**0 092 469**

**Claims**

1. A bleeding device (26) for a piston cylinder assembly (10) which includes an actuating volume (20) comprising a high portion (22) with respect to the general mounting orientation of the assembly, the agtuating volume being divided by a partition (28) into a pair of intercommunicating chambers (30,32) each having a high portion, a fluid inlet orifice (24) opening into a first one (30) of the chambers, and a bleeding orifice (38) communicating the high portion of the second chamber (32) with the exterior, characterized in that the first chamber (30) has as its high portion the high portion (22) of the actuating volume (20), the second chamber (32) having its own high portion (34) situated at a lower level than the first one, and in that it comprises a conduit (36) connecting the high portion (22) of the first chamber (30) and the second chamber (32).

2. The bleeding device of claim 1 for a piston cylinder assembly wherein said high portion (22) of the first chamber (30) is adjacent said piston (16), characterized in that said conduit is formed by a tubular member (36) extending through said partition (28).

3. The device of claim 2, characterized in that said tubular member (36) is slidingly mounted through the partition (28) and is biased by a spring (44) in contact with said piston (16).

4. The device of any of claims 1 to 3, characterized in that said partition (28) is constituted by a separate element.

5. A brake motor for an automotive vehicle, characterized in that it comprises a bleeding device according to any of claims 1 to 4.

4